# EUROPÄISCHE PATENTSCHRIFT

(11) **EP 3 114 378 B1**
(45) Veröffentlichungstag und Bekanntmachung des Hinweises auf die Patenterteilung: **28.02.2018**
(21) Anmeldenummer: 15725981.3
(22) Anmeldetag: 03.03.2015
(51) Int. Cl.: F16J 15/3236, F16J 15/02, F16L 17/035

(54) **DICHTUNG**
SEAL
JOINT D'ÉTANCHÉITÉ

(30) Priorität: 03.03.2014 AT 5003114 U
(43) Veröffentlichungstag der Anmeldung: 11.01.2017
(73) Patentinhaber: Henn GmbH & Co KG., 6850 Dornbirn (AT)
(72) Erfinder: HARTMANN, Harald, A-6850 Dornbirn (AT)
(74) Vertreter: Burger, Hannes
(86) Internationale Anmeldenummer: PCT/AT2015/050054
(87) Internationale Veröffentlichungsnummer: WO 2015/131213

(56) Entgegenhaltungen:
- WO-A1-2006/037967
- DE-A1-102013 200 986
- DE-A5-112012 000 747
- JP-A- 2010 255 698

## Beschreibung

Die Erfindung betrifft eine Dichtung, insbesondere ringförmige Dichtung, wie dies im Anspruch 1 angegeben ist.

Die AT 12 491 U1 offenbart eine Dichtung, insbesondere ringförmige Dichtung, welche eine erste Dichtlippe mit einer ersten Dichtfläche zur Anlage an einem ersten, insbesondere rohrförmigen, Bauteil und zumindest eine weitere Dichtlippe mit zumindest einer weiteren Dichtfläche zur Anlage an zumindest einem weiteren, insbesondere rohrförmigen, Bauteil aufweist, wobei die Dichtlippen in einem Lippenbasisbereich der Dichtung miteinander verbunden sind und jeweils an ihrem, dem Lippenbasisbereich entgegengesetzten Ende frei auskragen und auf ihren jeweils ihrer Dichtfläche entgegengesetzten Seiten jeweils eine Anlagefläche aufweisen, wobei in einer entlasteten Grundstellung der Dichtung außerhalb des Lippenbasisbereichs zwischen der ersten Dichtlippe und der weiteren Dichtlippe ein Freiraum angeordnet ist, sodass die Anlageflächen in der entlasteten Grundstellung voneinander beabstandet sind, und wobei die Dichtung eine zur Abdichtung der Bauteile vorgesehene Arbeitsstellung aufweist, in der die Dichtlippen mit ihren Anlageflächen einander abstützend aneinander anliegen. Wesentlich ist dabei, dass die erste Dichtlippe und die weitere Dichtlippe vom Lippenbasisbereich ausgehend in Richtung hin zum jeweiligen frei auskragenden Ende eine kontinuierlich zunehmende Dicke aufweisen.

Die in der AT 12 491 U1 beschriebene Ausführung besitzt den Nachteil, dass die Dichtung durch deren Ausgestaltung nur bedingt durch den stirnseitig der Dichtlippe auftretenden Mediumdruck aktiviert werden kann.

Die WO 2006/037967 A1 und die DE 10 2013 200 986 A1 offenbaren eine Dichtung mit einer äußeren Dichtlippe und einer inneren Dichtlippe. Die beiden Dichtlippen sind an einer Basis miteinander verbunden. Durch den Druck des Mediums werden die beiden Dichtlippen auseinandergedrückt, wodurch die Anpresskraft an die jeweils abzudichtenden Bauteile erhöht wird.

Der vorliegenden Erfindung liegt die Aufgabe zugrunde, eine Dichtung zu schaffen, welche die Vorteile einer in der AT 12 491 U1 beschriebenen Dichtung aufweist und deren Dichtwirkung zusätzlich durch an der Dichtlippe auftretenden Mediumdruck steigerbar ist.

Diese Aufgabe der Erfindung wird durch die Maßnahmen gemäß Anspruch 1 gelöst.

Erfindungsgemäß ist eine Dichtung, insbesondere ringförmige Dichtung, welche eine erste Dichtlippe mit einer ersten Dichtfläche zur Anlage an einem ersten, insbesondere rohrförmigen, Bauteil und zumindest eine weitere Dichtlippe mit zumindest einer weiteren Dichtfläche zur Anlage an zumindest einem weiteren, insbesondere rohrförmigen, Bauteil aufweist ausgebildet. Die Dichtlippen sind in einem Lippenbasisbereich der Dichtung miteinander verbunden und jeweils an ihrem, dem Lippenbasisbereich entgegengesetzten Ende, an welchen die Dichtflächen angeordnet sind, frei auskragend. Auf ihren jeweils ihrer Dichtfläche entgegengesetzten Seiten weisen sie jeweils eine Anlagefläche auf. In einer entlasteten Grundstellung der Dichtung außerhalb des Lippenbasisbereichs zwischen der ersten Dichtlippe und der weiteren Dichtlippe ist ein Freiraum angeordnet, sodass die Anlageflächen in der entlasteten Grundstellung voneinander beabstandet sind. Die Dichtung weist eine zur Abdichtung der Bauteile vorgesehene Arbeitsstellung aufweist, in der die Dichtlippen mit ihren Anlageflächen einander abstützend aneinander anliegen, wobei die erste Dichtlippe und die weitere Dichtlippe vom Lippenbasisbereich ausgehend in Richtung hin zum jeweiligen frei auskragenden Ende eine kontinuierlich zunehmende Dicke aufweisen. Die weitere Dichtlippe weist einen Dichtlippenflügel auf, welcher in einer Arbeitsstellung der Dichtung eine radial mit Druck beaufschlagbare Druckfläche ausbildet.

Ein Vorteil der erfindungsgemäßen Ausbildung liegt darin, dass die Dichtlippen abgesehen von dem sie verbindenden Lippenbasisbereich in der entlasteten Grundstellung voneinander beabstandet sind und bei der Montage zunächst mit geringen Montagekräften aufeinander zu bewegt werden können, um dann erst in der oder kurz vor der Arbeitsstellung mit ihren Anlageflächen aneinander zur Anlage kommen um sich dann in der Arbeitsstellung aneinander abzustützen. Eine solche erfindungsgemäße Dichtung stellt alle geforderten Vorteile zur Verfügung. So ist es durch den anfänglich zwischen den Dichtlippen vorhandenen Freiraum möglich, die miteinander zu verbindenden Bauteile zunächst einmal mit relativ wenig Kraftaufwand miteinander zu verbinden. Erst wenn die Anlageflächen der Dichtlippen miteinander in Kontakt kommen, nimmt die Eigenvorspannung der Dichtung deutlich zu, was in der Arbeitsstellung zu einem hohen Maß an Vorspannung bzw. Anpressdruck führt. Darüber hinaus können mit solchen Dichtungen auch relativ große Fertigungstoleranzen bei den miteinander zu verbindenden Bauteilen ausgeglichen werden. Besonders bei einer Dichtung, welche mit einem beanspruchten Dichtlippenflügel ausgestattet ist, ergibt sich der überraschende und große Vorteil gegenüber den bekannten Dichtungsausführungen, dass ein erhöhter Innendruck zwischen den aneinander abzudichtenden Rohrsegmenten zu einer verbesserten Dichtwirkung führt. Dies resultiert aus einem erhöhten Anpressdruck des Dichtlippenflügels auf das innenliegende Bauteil. Dadurch wird die Dichtwirkung der Dichtung verbessert, wobei sämtliche obig beschriebenen Vorteile trotzdem erreicht werden. Dieser überraschende und konträr erscheinende Effekt einer leichten Einbaubarkeit durch eine Flexible Dichtungsform kombiniert mit einer sehr guten Dichtwirkung der Dichtung wird erst durch die erfindungsgemäße Ausgestaltung eines Dichtflügels erreicht.

Weiters kann es zweckmäßig sein, dass in der Arbeitsstellung im Bereich zwischen dem Lippenbasisbereich und den aneinander anliegenden Anlageflächen zwischen den Dichtlippen ein Restfreiraum angeordnet ist. Von Vorteil ist hierbei, dass dadurch der Bereich, in welchem die Anlageflächen aneinander aufliegen und somit eine Dichtkraft auf die Dichtlippen übertragen wird, konstruktiv gut festgelegt werden kann. Dadurch kann die Dichtwirkung erhöht werden, da die Dichtwirkung in einem genau definierten Umfangsbereich der Dichtung erzielt werden kann.

Ferner kann vorgesehen sein, dass die Anlageflächen in einem vom Lippenbasisbereich beabstandeten Bereich der ersten Dichtlippe und der weiteren Dichtlippe angeordnet sind. Vorteilhaft ist hierbei, dass durch gezielte konstruktive Festlegung des Abstandes die Vorspannung und somit die Dichtwirkung beeinflusst werden kann. Wird beispielsweise der Abstand vergrößert, so ist die Vorspannung, welche durch den Lippenbasisbereich erreicht werden kann geringer.

Darüber hinaus kann vorgesehen sein, dass die Dichtflächen der ersten Dichtlippe und der weiteren Dichtlippe, in einem Querschnitt gesehen, in der entlasteten Grundstellung in einem Winkel kleiner als 90°, vorzugsweise kleiner als 70°, relativ zueinander angeordnet sind. Von Vorteil ist hierbei, dass durch eine Grundstellung im angegebenen Wertebereich das fügen der beiden abzudichtenden Rohrsegmente erleichtert werden kann.

Vorteilhaft ist auch eine Ausprägung, gemäß welcher die Dichtung auf der, der ersten Dichtlippe und der weiteren Dichtlippe entgegengesetzten Seite des Lippenbasisbereichs zumindest eine Schmutzlippe, vorzugsweise zwei Schmutzlippen, aufweist. Von Vorteil bei einer Ausgestaltung der Dichtung mit Schmutzlippen ist, dass die Dichtflächen, insbesondere jene Flächen an welchen die Dichtung an den abzudichtenden Rohrabschnitten aufliegt, vor Verschmutzung geschützt sind. Somit kann erreicht werden dass die Dichtung möglichst lange eine gute Dichtwirkung erfüllt.

Gemäß einer Weiterbildung ist es möglich, dass die erste Dichtlippe und/oder die weitere Dichtlippe und/oder der Lippenbasisbereich und/oder die gegebenenfalls vorhandene Schmutzlippe(n) und/oder der Dichtlippenflügel zumindest bereichsweise, vorzugsweise vollständig, elastisch verformbar ausgebildet ist bzw. sind. Von Vorteil ist hierbei, dass sich dadurch die Dichtlippe an die abzudichtenden Rohrabschnitte anpassen kann, und somit eine gute Dichtwirkung erzielt werden kann.

Ferner kann es zweckmäßig sein, dass der Dichtlippenflügel dadurch gebildet ist, dass in einem Stirnbereich der weiteren Dichtlippe eine Ausnehmung vorgesehen ist. Von Vorteil ist hierbei, dass die weitere Dichtlippe eine hohe Stabilität aufweisen kann und der Dichtlippenflügel durch die einfache Ausnehmung gebildet werden kann.

Alternativ dazu kann vorgesehen sein, dass der Dichtlippenflügel dadurch gebildet ist, dass dieser gegenüber einem Stirnbereich der weiteren Dichtlippe vorstehend ausgebildet ist. Vorteilhaft an einer derartigen Ausführungsvariante ist, dass eine derartig ausgebildete Dichtlippe einfach herzustellen ist.

Darüber hinaus kann vorgesehen sein, dass in der Arbeitsstellung beide Dichtlippen gegenüber deren aneinander anliegenden Anlageflächen vorstehend ausgebildet sind. Vorteilhaft ist hierbei, dass dadurch sowohl beim innenliegenden Rohrabschnitt als auch beim außenliegenden Rohrabschnitt eine verbesserte Dichtwirkung dadurch erreicht werden kann, dass eine Erhöhung des Druckes im abzudichtenden Innenraum der Rohre zu einer Erhöhung des Anpressdruckes führt.

Weiters kann vorgesehen sein, dass in der Arbeitsstellung im Bereich der vom Lippenbasisbereich distanzierten frei auskragenden Enden außerhalb der aneinander anliegenden Anlageflächen zwischen den Dichtlippen ein Druckbeaufschlagungsraum ausgebildet ist. Von Vorteil ist hierbei, dass durch den Druckbeaufschlagungsraum die Dichtlippen druckaktiviert werden können, sodass bei anliegen eines Innendruckes zwischen den beiden abzudichtenden Rohren die Dichtwirkung verbessert werden kann.

Entsprechend einer vorteilhaften Weiterbildung kann vorgesehen sein, dass die Dicke der ersten Dichtlippe im äußersten Endbereich des frei auskragenden Ende wider kontinuierlich abnimmt. Vorteilhaft ist hierbei, dass dadurch eine druckaktivierte Abdichtung der ersten Dichtlippe erreicht werden kann.

Vorteilhaft ist darüber hinaus ein Verfahren zum Abdichten eines ersten, insbesondere rohrförmigen, Bauteils gegen zumindest ein weiteres, insbesondere rohrförmiges, Bauteil mittels einer Dichtung in einer Verbindungsstellung, in der das erste Bauteil unter Zwischenschaltung der Dichtung vollständig mit dem weiteren Bauteil verbunden ist. Eine Dichtung, welche nach einem der Ansprüche 1 bis 11 ausgebildet ist wird in ein rohrförmiges Bauteil eingesetzt wird und anschließend ein weiteres rohrförmiges Bauteil in die Dichtung eingeschoben, wobei während des Einbauvorganges die Dichtung aus einer entlasteten Grundstellung in eine Arbeitsstellung überführt wird. Von besonderem Vorteil ist hierbei, dass durch die Verwendung genannter Dichtung ein zusammenfügen der einzelnen rohrförmigen Bauteile vereinfacht werden kann.

Zum besseren Verständnis der Erfindung wird diese anhand der nachfolgenden Figuren näher erläutert.

Es zeigen jeweils in stark vereinfachter, schematischer Darstellung:
- Fig. 1: eine Draufsicht auf eine erfindungsgemäße Dichtung;
- Fig. 2: einen Schnitt durch die Dichtung, insbesondere gemäß der Schnittlinie II-II aus Fig. 1;
- Fig. 3: einen analogen Schnitt durch eine in einen außenliegenden Rohrabschnitt eingesetzte Dichtung;
- Fig. 4: einen analogen Schnitt durch eine vollständig verbaute Dichtung;
- Fig. 5: einen Querschnitt einer ersten Ausführungsvariante einer erfindungsgemäßen Dichtungskontur;
- Fig. 6: einen Querschnitt einer zweiten Ausführungsvariante einer erfindungsgemäßen Dichtungskontur.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

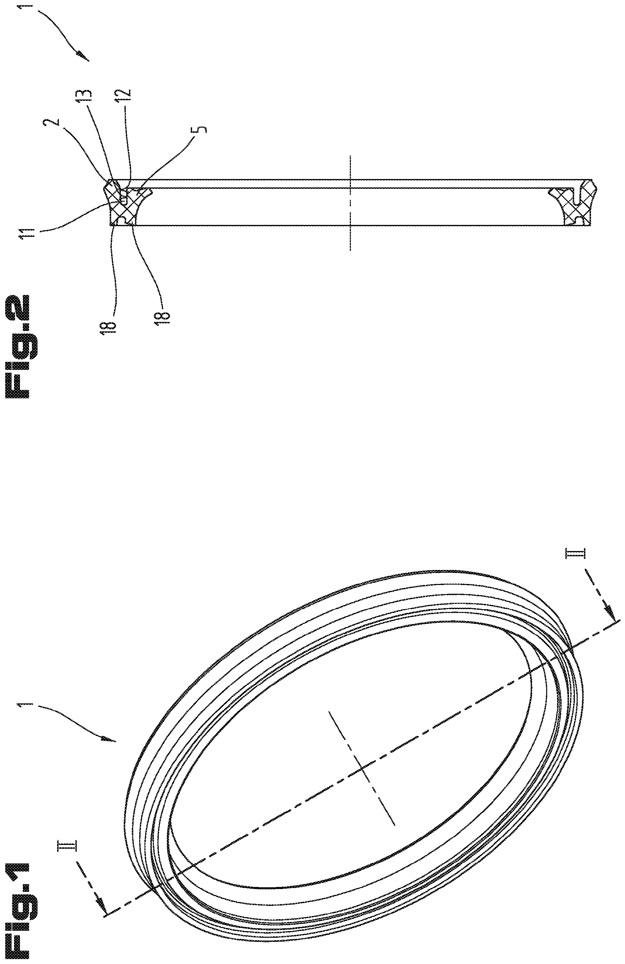

Fig. 1 zeigt, eine Draufsicht auf ein erstes Ausführungsbeispiel einer unverbauten Dichtung 1, welche als Dichtungsring ausgeführt ist. Bevor im Detail auf die erfindungsgemäßen Ausführungsbeispiele eingegangen wird, sei darauf hingewiesen, dass die erfindungsgemäße Dichtung 1 nicht nur ringförmig ausgebildet sein kann, sondern je nach Ausgestaltung der miteinander zu verbindenden und gegeneinander abzudichtenden Bauteile an deren Form angepasst sein kann.

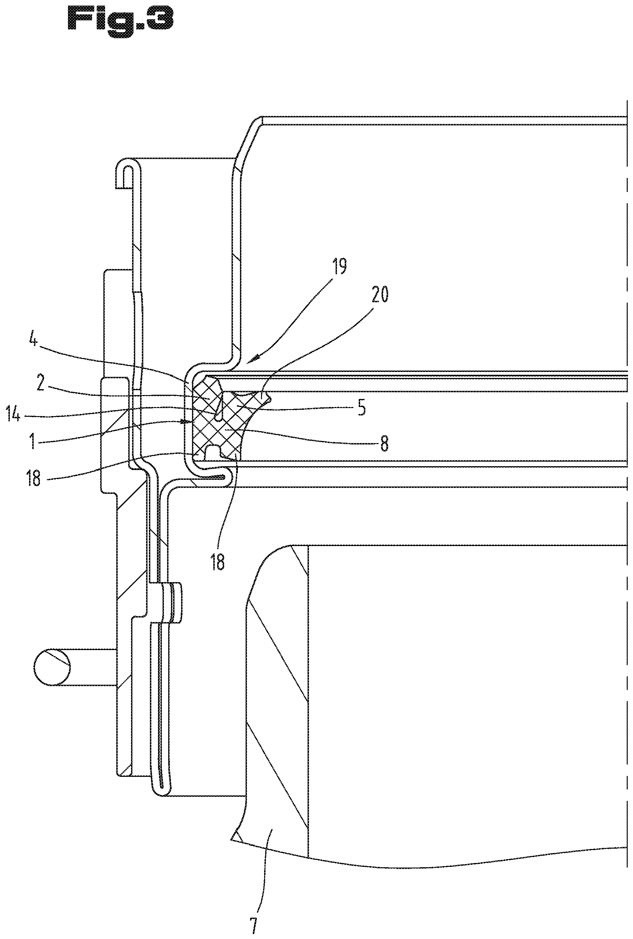

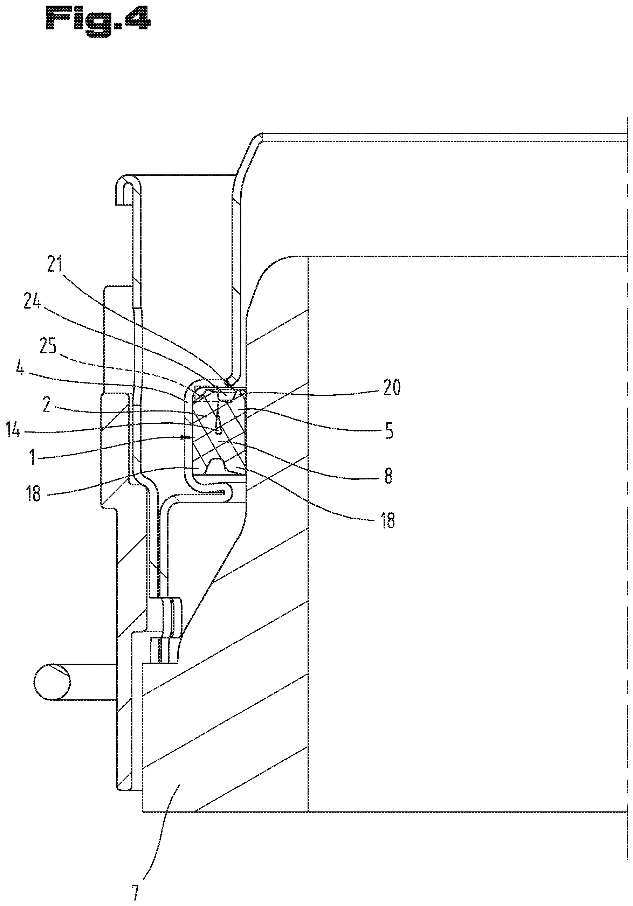

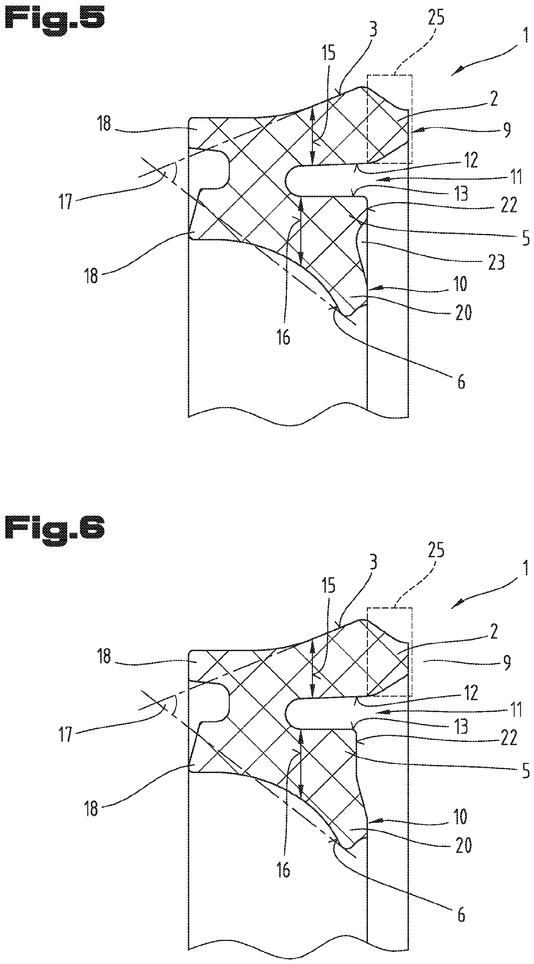

Fig. 2 zeigt einen Schnitt entlang der in Fig. 1 eingezeichneten Schnittlinie II-II. Zu verweisen ist insbesondere auf die in Fig. 2 am oberen und unteren Ende sichtbaren Querschnitte einer ersten Ausführungsvariante einer Dichtung 1, sowie die vergrößerte Darstellung des Querschnittes dieser Ausführungsvariante in Fig. 5. Auch die in Fig. 3 und Fig. 4 dargestellten Anordnungen zeigen die erste Ausführungsvariante der Dichtung 1. Eine weitere Ausführungsvariante der Dichtung 1 ist in Fig. 6 dargestellt.

Man sieht in Fig.2 bzw. der Vergrößerung dieses Querschnittes in Fig. 5 besonders gut, dass die Dichtung 1 eine erste Dichtlippe 2 und eine weitere Dichtlippe 5 aufweist, welche im Lippenbasisbereich 8 miteinander verbunden sind. In Fig. 2 befindet sich die gezeigte Dichtung 1 in ihrer entlasteten Grundstellung, in der zwischen den beiden Dichtlippen 2 und 5 ein Freiraum 11 gebildet ist. Der Freiraum 11 ist auf der von dem Lippenbasisbereich 8 abgewandten Seite nach außen hin offen.

Die dem Lippenbasisbereich 8 entgegengesetzten Enden 9 und 10 der beiden Dichtlippen 2 und 5 kragen jeweils frei aus. Auf ihren voneinander abgewandten Seiten weist jede der Dichtlippen 2 und 5 jeweils eine Dichtfläche 3 und 6 auf. Diese Dichtflächen 3 und 6 sind jeweils zur Anlage bzw. Abdichtung gegen eines der miteinander zu verbindenden Bauteile 4 und 7 vorgesehen. Auf den jeweils den Dichtflächen 3 und 6 gegenüber liegenden, also zum Freiraum 11 hin weisenden Seiten, weist jede Dichtlippe 2 und 5 eine Anlagefläche 12 und 13 auf. Mit den AnlagefIächen 12 und 13 liegen die Dichtlippen 2 und 5 einander abstützend aneinander an, wenn sich die Dichtung in ihrer Arbeitsstellung, in der sie die Bauteile 4 und 7 miteinander dichtend verbindet, befindet. Dies ist bei spielhaft in Fig. 4 gezeigt.

In Fig. 2 ist ebenfalls gut zu erkennen, dass die Dicke der Dichtlippen 2 und 5 von dem Lippenbasisbereich 8 ausgehend in Richtung hin zu den Enden 9 und 10 zunimmt.

Weiters kann vorgesehen sein, dass die Dichtung 1 auf der von den Dichtlippen 2 und 5 abgewandten Seite des Lippenbasisbereichs 8 jeweils eine Schmutzlippe 18 aufweist. Diese Schmutzlippen 18 sind an sich bekannt und dienen dazu, zu verhindern, dass Schmutz von außen in den Bereich der Dichtflächen 3 und 6 eindringen kann.

Fig. 3 zeigt zwei miteinander zu verbindende Bauteile 4 und 7, wobei die Dichtung 1 dazu vorgesehen ist, diese beiden Bauteile 4 und 7 in der in Fig. 4 dargestellten Verbindungsstellung gegeneinander abzudichten.

In Fig. 3 befinden sich die Bauteile 4 und 7 noch in einer losgelösten Stellung, wobei sich die Dichtung 1 hierbei in ihrer entlasteten Grundstellung befindet. Die beiden Bauteile 4 und 7, welche miteinander zu verbinden und gegeneinander abzudichten sind, sind im gezeigten Ausführungsbeispiel rohrförmig ausgebildet. Konkret handelt es sich beim Bauteil 4 um eine Buchse und beim Bauteil 7 um ein korrespondierendes männliches Gegenstück einer steckbaren Rohrverbindung. Die Buchse 4 ist in diesem Ausführungsbeispiel als Blechformteil ausgeführt. Sie weist eine Nut 19 auf, in der die Dichtung 1 Iiegt.

Eine derartige Nut 19 sichert die Dichtung 1 in ihrer Position, wenn das als männIiches Gegenstück ausgeführte weitere Bauteil 7 in das erste Bauteil 4 eingeschoben wird. Die Position wird hierbei dadurch gesichert, dass die Dichtung 1 in der Nut 19 formschlüssig aufgenommen ist.

In der Iosgelösten Stellung gemäß Fig. 3 Iiegt die Dichtung 1 mit ihrer ersten Dichtfläche 3 der ersten Dichtlippe 2 bereits am ersten Bauteil 4 an, während die weitere Dichtlippe 5 noch nicht verformt ist, da das Bauteil 7 noch nicht eingefügt ist. Die Dichtlippe 2 ist hierbei durch das Bauteil 4, bzw. die Nut 19 im Bauteil 4 bereits so stark verformt, dass der im völlig unbelasteten Zustand der Dichtung 1 vorhandene Freiraum 11 zwischen den beiden Dichtlippen 2, 5 aneinander angedrückt oder zumindest annähernd aneinander angedrückt ist, sodass die Dichtlippen 2, 5 an den Anlageflächen 12, 13 aneinander annähernd oder vollständig aufliegen. Hierbei kann vorgesehen sein, dass die Dichtlippen 2, 5 nicht auf voller Länge aneinander gepresst werden, sondern nur in einem kleinen Teilbereich der Anlageflächen, sodass anstelle des Freiraumes 11 nur noch ein Restfreiraum 14 vorhanden ist.

Beim Einbau der Dichtung 1 in den Bauteil 4, insbesondere in die Nut 19 wird die Dichtung 1 soweit verformt und zusammengedrückt bis die runde Umfangsform dermaßen verkleinert und zusammengedrückt ist, sodass die Dichtung 1 in die Nut 19 eingesetzt werden kann. Am Ende dieses Einbauvorganges kann sich die Dichtung 1 in der Nut 19 liegend wieder entspannen und annähernd in ihren völlig unbelasteten Ausgangszustand zurückverformen. Die Dichtlippe 2 bleibt hierbei leicht verformt und schmiegt sich mit ihrer ersten Dichtfläche 3 an den Bauteil 4, sodass dieser von der Dichtung 1, insbesondere von der Dichtfläche 3 vollumfänglich berührt wird. Die hierzu nötige Kraft um die Dichtfläche 3 an den Bauteil 4 anpressen zu können wird durch in der Dichtung 1 aufgrund der Verformung hervorgerufene Eigenspannungen erreicht.

Fig. 4 zeigt die Dichtung 1 in ihrer Arbeitsstellung, wobei die beiden Bauteile 4 und 7 unter Zwischenschaltung der Dichtung 1 miteinander verbunden sind. Beim Einschieben des zweiten Bauteils 7 in das erste Bauteil 4 wird ausgehend von der Stellung gemäß der Fig. 3 die weitere Dichtlippe 5 durch das zweite Bauteil 7 in Richtung zur ersten Dichtlippe 2 gedrückt. Aufgrund der nur geringen Verformung sind zu Beginn des Einschiebevorganges nur geringe Montagekräfte notwendig um ein Fügen der Bauteile 4,7 erreichen zu können.

Durch das Aufeinanderzuschwenken der Dichtlippen 2 und 5 bewegen sich die Anlageflächen 12 und 13 der beiden Dichtlippen 2 und 5 noch weiter aufeinander zu, bis sie aneinander zur Anlage kommen. Der Freiraum 11 wird bei dieser Schwenkbewegung entsprechend verengt bzw. spätestens während dieses Fügevorganges bis auf den Restfreiraum 14 geschlossen. Sobald die beiden Dichtlippen 2 und 5 mit ihren Anlageflächen 12 und 13 aneinander anliegen, stützen sie sich aneinander ab. Durch das Abstützen der Dichtlippen 2,5 aneinander wird der Verformung der Dichtung 1 ein größerer Widerstand entgegen gesetzt, wodurch deutlich höhere Anpresskräfte zwischen der Dichtung 1 und den Bauteilen 4,7 aufgebracht wird.

Die weitere Dichtlippe 5 verformt sich im Zuge des Fügevorganges der beiden Bauteile 4,7 weiter, sodass insbesondere ein Dichtlippenflügel 20 aufgrund der Elastizität der weiteren Dichtlippe 5 in sich verformt wird.

Am Ende des Fügevorganges der Bauteile 4, 7 ist die Dichtung 1 vollständig verformt, sodass sie ihre Arbeitsstellung erreicht hat, welche in Fig. 4 dargestellt ist.

In der Arbeitsstellung ist die zweite Dichtlippe 5, respektive der Dichtlippenflügel 20, soweit verformt, dass sich an der der ersten Dichtlippe 2 zugewandten Seite, eine Druckfläche 21 ausbildet. Der Dichtlippenflügel 20 bildet hierbei einen Bereich, welcher über den Körper der weiteren Dichtlippe 5, welcher an der ersten Dichtlippe 2 anliegt, übersteht.

Die Druckfläche 21 ist in der Arbeitsstellung so ausgerichtet, dass sie eine axiale Erstreckung aufweist. Führt nun eine Erhöhung des Innendruckes zwischen den beiden abzudichtenden Bauteilen 4,7 zu einer Erhöhung des Druckes auf die Druckfläche 21, so wird bedingt durch den Druck auf die Druckfläche 21 eine Normalkraft auf diese ausgeübt. Durch die Normalkraft auf die Druckfläche 21 wird der Dichtlippenflügel 20 an den abzudichtenden Bauteil 7 angepresst, wodurch die Dichtwirkung verbessert wird. Hierbei kann vorgesehen sein, dass nur an der weiteren Dichtlippe 5 ein Dichtlippenflügel 20 ausgebildet ist.

Zusätzlich kann vorgesehen sein, dass an der ersten Dichtlippe 2 ein Endbereich 25 ausgebildet ist, welcher im eingebauten Zustand eine gleiche Wirkung wie der Dichtlippenflügel 20 aufweist. Das heißt auch dieser Endbereich 25 kann so ausgebildet sein, dass bei Erhöhung des Innendruckes eine innenliegende Fläche des Endbereiches 25 druckbeaufschlagt wird, wodurch sich eine Normalkraft auf die Druckfläche ergibt, und wodurch der Endbereich an das Bauteil 4 angepresst wird. Bei einer derartig ausgebildeten Dichtung 1 ergibt sich im eingebauten Zustand, also in der Arbeitsstellung, ein Druckbeaufschlagungsraum 24, welcher dazu ausgebildet ist um die obig beschriebenen Druckflächen zu formen und die obig beschriebenen Mechanismen erreichen zu können.

Weiters ist in Fig. 4 gut zu sehen, dass auch in der Arbeitsstellung der Dichtung 1 in bevorzugten Ausgestaltungsformen noch ein Restfreiraum 14 zwischen Lippenbasisbereich 8 und den aneinander anliegenden Anlageflächen 12 und 13 zwischen den Dichtlippen 2 und 5 verbleibt.

In Fig. 5 ist der Querschnitt des in Fig. 2 gezeigten Ausführungsbeispiels der Dich- tung 1 noch einmal vergrößert dargestellt. Besonders gut zu sehen ist hier der Winkel 17, welchen die Dichtflächen 3 und 6 der Dichtlippen 2 und 5 miteinander einschließen. Dieser Winkel 17 sollte günstigerweise zumindest kleiner 90°, vorzugsweise kleiner 70°, sein. Im vorliegenden Fall beträgt er ca. 60°.

Eingezeichnet ist in dieser vergrößerten Darstellung auch die Dicke 15 der ersten Dichtlippe 2 sowie die Dicke 16 der zweiten Dichtlippe 5 an einer jeweils mehr oder weniger beliebig ausgewählten Stelle. Bevorzugte Ausgestaltungsformen der erfindungsgemäßen Dichtung 1 sehen jeweils vor, dass die Dicke 15 und/oder 16 der ersten Dichtlippe 2 und/oder der weiteren Dichtlippe 5 vom Lippenbasisbereich 8 ausgehend in Richtung hin zum jeweiligen frei auskragenden Ende 9 bzw. 10 zumindest bereichsweise, vorzugsweise kontinuierlich, zunimmt. Im vorliegenden Ausführungsbeispiel gemäß Fig. 2 und 5 nehmen sowohl die Dicke 15 der Dichtlippe 2 als auch die Dicke 16 der Dichtlippe 5 kontinuierlich in dieser Richtung zu. Bei den Dichtlippen 2, 5 kann jedoch ein Endbereich 25 bzw. ein Dichtlippenflügel 20 ausgebildet sein, in welchen die Dicke 15 und 16 nicht mehr zunimmt, sondern welche so ausgeformt sind, sodass obig beschriebene Effekte zur Abdichtung im Arbeitszustand erreicht werden.

Die weitere Dichtlippe 5 weist hierbei einen Lippenflügel 20 auf. Der Lippenflügel ist ein Bereich am Ende 10 der Dichtlippe, welcher gegenüber dem Hauptkörper der weiteren Dichtlippe 5 eher vorstehend ausgebildet ist. Durch diese vorstehende Ausbildung kann erreicht werden, dass sich der Lippenflügel 20 leicht verformen kann und im verbauten oder Arbeitszustand den beschriebenen Lippenflügel 20 mit der Druckfläche 21 ausbildet. Um diese Effekte zu erreichen kann vorgesehen sein, dass beispielsweise am Ende 10, im Speziellen an einer Stirnfläche 22 der weiteren Dichtlippe 5 eine Ausnehmung 23 ausgebildet ist, durch welche sich der Lippenflügel 20 ergibt und durch welche sich obig beschriebene Effekte erreichen lassen.

Die erste Dichtlippe 2 kann in einem Endbereich 25 mit einer kontinuierlich abnehmenden Dicke 15 versehen sein, sodass auch hier die beschriebenen Effekte erreicht werden können. Weiters kann vorgesehen sein, das in Axialrichtung gesehen der Endbereich 25 gegenüber der Stirnfläche 22 vorstehend ausgebildet ist. Besonders dadurch können die Dichteffekte der ersten Dichtlippe 2 erreicht werden, da dadurch auch in der Arbeitsstellung der Dichtung 1 ein gegenüber der Stirnfläche 22 vorstehender Abschnitt ausgebildet ist, wobei sich eine Druckfläche ergibt, welche die bereits beschriebenen Effekte und Vorteile mit sich bringt.

In Fig. 6 ist eine weitere und gegebenenfalls für sich eigenständige Ausführungsform der Dichtung 1 dargestellt, wobei wiederum für gleiche Teile gleiche Bezugszeichen bzw. Bauteilbezeichnungen wie in den vorangegangenen Fig. 1 bis 5 verwendet werden. Bei dieser Ausführungsform ist die Stirnfläche 22 der weiteren Dichtlippe 5 näher am Lippenbasisbereich 8 angeordnet ist, als bei der in Fig. 5 dargestellten Ausführungsform. Dadurch muss keine Ausnehmung 23 vorgesehen sein, um den Dichtlippenflügel 20 ausbilden zu können, sondern wird dieser dadurch erreicht, dass er gegenüber der Stirnfläche 22 vorstehend ausgebildet ist. Die Funktion des Dichtlippenflügels bzw. die Form im verbauten Zustand ist ähnlich der in den Figuren 1 bis 5 beschriebenen Ausführungsform und wird daher der Kürze halber hier nicht nochmals gesondert beschrieben.

Die Ausführungsbeispiele zeigen mögliche Ausführungsvarianten der Dichtlippe, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Vor allem können die einzelnen in den Figuren 1 bis 5 und 6 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus der Dichtung 1 diese bzw. deren verbaute Stellungen teilweise unmaßstäblich und/oder vergrößert und/oder verkleinert dargestellt wurden.

### Bezugszeichenaufstellung

- 1: Dichtung
- 2: erste Dichtlippe
- 3: erste Dichtfläche
- 4: erstes Bauteil
- 5: weitere Dichtlippe
- 6: weitere Dichtfläche
- 7: weiteres Bauteil
- 8: Lippenbasisbereich
- 9: Ende
- 10: Ende
- 11: Freiraum
- 12: AnIagefIäche
- 13: AnIagefIäche
- 14: Restfreiraum
- 15: Dicke
- 16: Dicke
- 17: Winkel
- 18: Schmutzlippe
- 19: Nut
- 20: Dichtlippenflügel
- 21: Druckfläche
- 22: Stirnfläche
- 23: Ausnehmung
- 24: Druckbeaufschlagungsraum
- 25: Endbereich

## Patentansprüche

1. Dichtung (1), insbesondere ringförmige Dichtung (1), welche eine erste Dichtlippe (2) mit einer ersten Dichtfläche (3) zur Anlage an einem ersten, insbesondere rohrförmigen, Bauteil (4) und zumindest eine weitere Dichtlippe (5) mit zumindest einer weiteren Dichtfläche (6) zur Anlage an zumindest einem weiteren, insbesondere rohrförmigen, Bauteil (7) aufweist, wobei die Dichtlippen (2, 5) in einem Lippenbasisbereich (8) der Dichtung (1) miteinander verbunden sind und jeweils an ihrem, dem Lippenbasisbereich (8) entgegengesetzten Ende (9, 10), an welchen die Dichtflächen (3, 6) angeordnet sind, frei auskragen und auf ihren jeweils ihrer Dichtfläche (3, 6) entgegengesetzten Seiten jeweils eine Anlagefläche (12, 13) aufweisen, wobei in einer entlasteten Grundstellung der Dichtung (1) außerhalb des Lippenbasisbereichs (8) zwischen der ersten Dichtlippe (2) und der weiteren Dichtlippe (5) ein Freiraum (11) angeordnet ist, sodass die Anlageflächen (12, 13) in der entlasteten Grundstellung voneinander beabstandet sind, wobei die erste Dichtlippe (2) und die weitere Dichtlippe (5) vom Lippenbasisbereich (8) ausgehend in Richtung hin zum jeweiligen frei auskragenden Ende (9, 10) eine kontinuierlich zunehmende Dicke (15, 16) aufweisen, **dadurch gekennzeichnet, dass** die Dichtung (1) eine zur Abdichtung der Bauteile (4, 7) vorgesehene Arbeitsstellung aufweist, in der die Dichtlippen (2, 5) mit ihren Anlageflächen (12, 13) einander abstützend aneinander anliegen, wobei die Anlageflächen (12, 13) in einem vom Lippenbasisbereich (8) beabstandeten Bereich der ersten Dichtlippe (2) und der weiteren Dichtlippe (5) angeordnet sind und wobei die weitere Dichtlippe (5) einen Dichtlippenflügel (20) aufweist, welcher in einer Arbeitsstellung der Dichtung (1) eine radial mit Druck beaufschlagbare Druckfläche (21) ausbildet.

2. Dichtung (1) nach Anspruch 1, **dadurch gekennzeichnet, dass** in der Arbeitsstellung im Bereich zwischen dem Lippenbasisbereich (8) und den aneinander anliegenden Anlageflächen (12, 13) zwischen den Dichtlippen (2, 5) ein Restfreiraum (14) angeordnet ist.

3. Dichtung (1) nach einem der Ansprüche 1 bis 2, **dadurch gekennzeichnet, dass** die Dichtflächen (3, 6) der ersten Dichtlippe (2) und der weiteren Dichtlippe (5), in einem Querschnitt gesehen, in der entlasteten Grundstellung in einem Winkel (17) kleiner als 90°, vorzugsweise kleiner als 70°, relativ zueinander angeordnet sind.

4. Dichtung (1) nach einem der Ansprüche 1 bis 3, **dadurch gekennzeichnet, dass** die Dichtung (1) auf der, der ersten Dichtlippe (2) und der weiteren Dichtlippe (5) entgegengesetzten Seite des Lippenbasisbereichs (8) zumindest eine Schmutzlippe (18), vorzugsweise zwei Schmutzlippen (18), aufweist.

5. Dichtung (1) nach einem der Ansprüche 1 bis 4, **dadurch gekennzeichnet, dass** die erste Dichtlippe (2) und/oder die weitere Dichtlippe (5) und/oder der Lippenbasisbereich (8) und/oder die gegebenenfalls vorhandene Schmutzlippe(n) (18) und/oder der Dichtlippenflügel (20) zumindest bereichsweise, vorzugsweise vollständig, elastisch verformbar ausgebildet ist bzw. sind.

6. Dichtung (1) nach einem der Ansprüche 1 bis 5, **dadurch gekennzeichnet, dass** der Dichtlippenflügel (20) dadurch gebildet ist, dass in einem Stirnbereich (22) der weiteren Dichtlippe (5) eine Ausnehmung (23) vorgesehen ist.

7. Dichtung (1) nach einem der Ansprüche 1 bis 5, **dadurch gekennzeichnet, dass** der Dichtlippenflügel (20) dadurch gebildet ist, dass dieser gegenüber einem Stirnbereich (22) der weiteren Dichtlippe (5) vorstehend ausgebildet ist.

8. Dichtung (1) nach einem der Ansprüche 1 bis 7, **dadurch gekennzeichnet, dass** in der Arbeitsstellung beide Dichtlippen (2, 5) gegenüber deren aneinander anliegenden Anlageflächen (12, 13) vorstehend ausgebildet sind.

9. Dichtung (1) nach einem der Ansprüche 1 bis 8, **dadurch gekennzeichnet, dass** in der Arbeitsstellung im Bereich der vom Lippenbasisbereich (8) distanzierten frei auskragenden Enden (9, 10) außerhalb der aneinander anliegenden Anlageflächen (12, 13) zwischen den Dichtlippen (2, 5) ein Druckbeaufschlagungsraum (24) ausgebildet ist.

10. Dichtung (1) nach einem der Ansprüche 1 bis 9, **dadurch gekennzeichnet, dass** die Dicke (15) der ersten Dichtlippe (2) im äußersten Endbereich (25) des frei auskragenden Ende (9) wider kontinuierlich abnimmt.

11. Anordnung mit einem ersten, insbesondere rohrförmigen, Bauteil (4) und zumindest einem weiteren, insbesondere rohrförmigen, Bauteil (7) und einer Dichtung (1) zur Abdichtung des ersten Bauteils (4) gegen das weitere Bauteil (7) in einer Verbindungsstellung, in der das erste Bauteil (4) unter Zwischenschaltung der Dichtung (1) vollständig mit dem weiteren Bauteil (7) verbunden ist, **dadurch gekennzeichnet, dass** die Dichtung (1) eine Dichtung (1) nach einem der Ansprüche 1 bis 10 ist und dass sich die Dichtung (1) in der Verbindungsstellung der Bauteile (4,7) in ihrer Arbeitsstellung befindet und die Anordnung eine losgelöste Stellung aufweist, in der die Bauteile (4, 7) voneinander getrennt sind, wobei sich die Dichtung (1) in der losgelösten Stellung der Bauteile (4, 7) in ihrer entlasteten Grundstellung befindet.

12. Verfahren zum Abdichten eines ersten, insbesondere rohrförmigen, Bauteils (4) gegen zumindest ein weiteres, insbesondere rohrförmiges, Bauteil (7) mittels einer Dichtung (1) in einer Verbindungsstellung, in der das erste Bauteil (4) unter Zwischenschaltung der Dichtung (1) vollständig mit dem weiteren Bauteil (7) verbunden ist, **dadurch gekennzeichnet, dass** eine Dichtung (1), welche nach einem der Ansprüche 1 bis 10 ausgebildet ist in ein rohrförmiges Bauteil (7) eingesetzt wird und anschließend ein weiteres rohrförmiges Bauteil (7) in die Dichtung (1) eingeschoben wird, wobei während des Einbauvorganges die Dichtung aus einer entlasteten Grundstellung in eine Arbeitsstellung überführt wird, sodass die Dichtlippen (2, 5) mit ihren Anlageflächen (12, 13) einander abstützend aneinander anliegen.

## Claims

1. A seal (1), in particular an annular seal (1), which comprises a first sealing lip (2) having a first sealing surface (3) for contacting a first component (4), particularly a tubular component, and at least one other sealing lip (5) having at least one other sealing surface (6) for contacting at least one other component (7), particularly a tubular component, with the sealing lips (2, 5) being connected to one another in a lip base region (8) of the seal (1) and respectively protruding freely on their end (9, 10), which lies opposite of the lip base region (8) and on which the sealing surfaces (3, 6) are arranged, with said sealing lips respectively having a contact surface (12, 13) on their respective sides lying opposite of the sealing surface (3, 6), with a clearance (11) being arranged between the first sealing lip (2) and the other sealing lip (5) outside the lip base region (8) in a relaxed position of the seal (1) such that the contact surfaces (12, 13) are spaced apart from one another in the relaxed position, and with the first sealing lip (2) and the other sealing lip (5) having a continuously increasing thickness (15, 16) from the lip base region (8) in the direction toward their respective freely protruding end (9, 10), **characterized in that** the seal (1) has a working position, in which the components (4, 7) are sealed relative to one another and the sealing lips (2, 5) rests against one another with their contact surfaces (12, 13) in a mutually supporting fashion, with the contact surfaces (12, 13) being arranged in a region of the first sealing lip (2) and the other sealing lip (5), which is spaced apart from the lip base region (8), and with the other sealing lip (5) having a sealing lip flank (20), which in a working position of the seal (1) forms a pressure surface (21) that can be radially acted upon with pressure.

2. The seal (1) according to claim 1, **characterized in that** a residual clearance (14) is in the working position arranged between the sealing lips (2, 5) in the region between the lip base region (8) and the contact surfaces (12, 13) resting against one another.

3. The seal (1) according to one of claims 1-2, **characterized in that** the sealing surfaces (3, 6) of the first sealing lip (2) and the other sealing lip (5) are in a cross section arranged relative to one another at an angle (17) of less than 90°, preferably less than 70°, in the relaxed normal position.

4. The seal (1) according to one of claims 1-3, **characterized in that** the seal (1) has at least one dirt lip (18), preferably two dirt lips (18), on the side of the lip base region (8) lying opposite of the first sealing lip (2) and the other sealing lip (5).

5. The seal (1) according to one of claims 1-4, **characterized in that** the first sealing lip (2) and/or the other sealing lip (5) and/or the lip base region (8) and/or the optionally provided dirt lip(s) (18) and/or the sealing lip flank (20) is or are at least sectionally, in particular entirely, realized in an elastically deformable fashion.

6. The seal (1) according to one of claims 1-5, **characterized in that** the sealing lip flank (20) is formed by providing a recess (23) in a face region (22) of the other sealing lip (5).

7. The seal (1) according to one of claims 1-5, **characterized in that** the sealing lip flank (20) is formed by realizing the sealing lip flank in a projecting fashion opposite of a face region (22) of the other sealing lip (5).

8. The seal (1) according to one of claims 1-7, **characterized in that** both sealing lips (2, 5) are in the working position realized such that they project from their adjoining contact surfaces (12, 13).

9. The seal (1) according to one of claims 1-8, **characterized in that** a pressurizing space (24) is in the working position formed between the sealing lips (2, 5) outside the adjoining contact surfaces (12, 13) in the region of the freely protruding ends (9, 10), which are spaced apart from the lip base region (8).

10. The seal (1) according to one of claims 1-9, **characterized in that** the thickness (15) of the first sealing lip (2) continuously decreases again in the outer end region (25) of the freely protruding end (9).

11. An arrangement with a first component (4), particularly a tubular component, and at least one other component (7), particularly a tubular component, and with a seal (1) for sealing the first component (4) relative to the other component (7) in a connected state, in which the first component (4) is fully connected to the other component (7) with the seal (1) arranged in between, **characterized in that** the seal (1) is a seal (1) according to one of claims 1-10 and the seal (1) is in its working position in the connected state of the components (4, 7), with the arrangement also having a released state, in which the components (4, 7) are separated from one another, and with the seal (1) being in its relaxed normal position in the released state of the components (4, 7).

12. A method for sealing a first component (4), particularly a tubular component, relative to at least one other component (7), particularly a tubular component, by means of a seal (1) in a connected state, in which the first component (4) is fully connected to the other component (7) with the seal (1) arranged in between, **characterized in that** a seal (1) according to one of claims 1-10 is inserted into a tubular component (7) and another tubular component (7) is subsequently inserted into the seal (1), with the seal being transferred from a relaxed normal position into a working position during the installation process such that the sealing lips (2, 5) rests against one another with their contact surfaces (12, 13) in a mutually supporting fashion.

## Revendications

1. Joint d'étanchéité (1), plus particulièrement joint d'étanchéité (1) annulaire, qui comprend une première lèvre d'étanchéité (2) avec une première surface d'étanchéité (3) destinée à s'appuyer contre une première pièce (4), plus particulièrement tubulaire, et au moins une autre lèvre d'étanchéité (5) avec au moins une deuxième surface d'étanchéité (6) destinée à s'appuyer contre au moins une autre pièce (7), plus particulièrement tubulaire, les lèvres d'étanchéité (2, 5) étant reliées entre elles dans une zone de base des lèvres (8) du joint d'étanchéité (1) et dépassant librement chacune au niveau d'une extrémité (9, 10), opposée à la zone de base des lèvres (8), sur laquelle les surfaces d'étanchéité (3, 6) sont disposées et comprenant chacune, sur chacun des côtés opposés à leur surface d'étanchéité (3, 6), une surface d'appui (12, 13), moyennant quoi, dans une position de base relâchée du joint d'étanchéité (1), à l'extérieur de la zone de base des lèvres (8), entre la première lèvre d'étanchéité (2) et l'autre lèvre d'étanchéité (5), se trouve un espace libre (11), de façon à ce que les surfaces d'appui (12, 13) soient éloignées entre elles dans la position de base relâchée, la première lèvre d'étanchéité (2) et l'autre lèvre d'étanchéité (5) présentant, à partir de la zone de base des lèvres (8), en direction de l'extrémité (9, 10) dépassant librement, une épaisseur (15, 16) augmentant de manière constante, **caractérisé en ce que** le joint d'étanchéité (1) comprend une position de travail, prévue pour l'étanchéité des pièces (4, 7), dans laquelle les lèvres d'étanchéité (2, 5) s'appuient l'une contre l'autre en se soutenant mutuellement, les surfaces d'appui (12, 13) étant disposées dans une zone, éloignée de la zone de base des lèvres (8), de la première lèvre d'étanchéité (2) et de l'autre lèvre d'étanchéité (5) et l'autre lèvre d'étanchéité (5) comprenant une ailette de lèvre d'étanchéité (20), qui forme, dans une position de travail du joint d'étanchéité (1), une surface de pression (21) pouvant être soumise à une pression.

2. Joint d'étanchéité (1) selon la revendication 1, **caractérisé en ce que**, dans la position de travail, entre la zone de base des lèvres (8) et les surfaces d'appui (12, 13), s'appuyant l'une contre l'autre, entre les lèvres d'étanchéité (2, 5), se trouve un espace libre résiduel (14).

3. Joint d'étanchéité (1) selon l'une des revendications 1 à 2, **caractérisé en ce que** les surfaces d'étanchéité (3, 6) de la première lèvre d'étanchéité (2) et de l'autre lèvre d'étanchéité (5) sont disposées l'une par rapport à l'autre, vues en section transversale, dans la position de base relâchée, en formant un angle (17) inférieur à 90°, de préférence inférieur à 70°.

4. Joint d'étanchéité (1) selon l'une des revendications 1 à 3, **caractérisé en ce que** le joint d'étanchéité (1) comprend, sur le côté de la zone de base des lèvres (8) opposé à la première lèvre d'étanchéité (2) et de l'autre lèvre d'étanchéité (5), au moins une lèvre antisalissure (18), de préférence deux lèvres antisalissures (18).

5. Joint d'étanchéité (1) selon l'une des revendications 1 à 4, **caractérisé en ce que** la première lèvre d'étanchéité (2) et/ou l'autre lèvre d'étanchéité (5) et/ou la zone de base des lèvres (8) et/ou l'éventuelle ou les éventuelles lèvre(s) d'étanchéité (18) et/ou l'ailette de lèvre d'étanchéité (20) est/sont conçue(s) au moins partiellement, de préférence entièrement, de manière déformable élastiquement.

6. Joint d'étanchéité (1) selon l'une des revendications 1 à 5, **caractérisé en ce que** l'ailette de lèvre d'étanchéité (20) est conçue de façon à ce que, dans une zone frontale (22) de l'autre lèvre d'étanchéité (5), un évidement (23) soit prévu.

7. Joint d'étanchéité (1) selon l'une des revendications 1 à 5, **caractérisé en ce que** l'ailette de lèvre d'étanchéité (20) est conçue de façon à ce que celle-ci soit conçue de façon à dépasser par rapport à une zone frontale (22) de l'autre lèvre d'étanchéité (5).

8. Joint d'étanchéité (1) selon l'une des revendications 1 à 7, **caractérisé en ce que**, dans la position de travail, les deux lèvres d'étanchéité (2, 5) sont conçues de façon à dépasser par rapport à leurs surfaces d'appui (12, 13) s'appuyant l'une contre l'autre.

9. Joint d'étanchéité (1) selon l'une des revendications 1 à 8, **caractérisé en ce que**, dans la position de travail, au niveau des extrémités (9, 10) dépassant librement et distante de la zone de base des lèvres (8), à l'extérieur des surfaces d'appui (12, 13) s'appuyant l'une contre l'autre, entre les lèvres d'étanchéité (2, 5), est prévu un espace de pressurisation (24).

10. Joint d'étanchéité (1) selon l'une des revendications 1 à 9, **caractérisé en ce que** l'épaisseur (15) de la première lèvre d'étanchéité (2) diminue de manière continue dans la zone d'extrémité (25), la plus extérieure, de l'extrémité (9) dépassant librement.

11. Disposition avec une première pièce (4) plus particulièrement tubulaire et au moins une pièce (7), plus particulièrement tubulaire, et un joint d'étanchéité (1) pour l'étanchéité de la première pièce (4) contre l'autre pièce (7) dans une position de liaison, dans laquelle la première pièce (4) est entièrement reliée avec l'autre pièce (7) par l'intermédiaire du joint d'étanchéité (1), **caractérisé en ce que** le joint d'étanchéité (1) est un joint d'étanchéité (1) selon l'une des revendications 1 à 10 et **en ce que** le joint d'étanchéité (1), dans la position de liaison des pièces (4, 7), se trouve dans sa position de travail et la disposition comprend une position relâchée dans laquelle les pièces (4, 7) sont séparées entre elles, le joint d'étanchéité (1) se trouvant dans sa position de base relâchée lorsque les pièces (4, 7) se trouvent dans leur position de base relâchée.

12. Procédé d'étanchéification d'une première pièce (4) plus particulièrement tubulaire, contre au moins une autre pièce (7), plus particulièrement tubulaire, au moyen d'un joint d'étanchéité (1) dans une position de liaison, dans laquelle la première pièce (4) est entièrement reliée avec l'autre pièce (7) par l'intermédiaire du joint d'étanchéité (1), **caractérisé en ce qu'**un joint d'étanchéité (1), qui est conçu selon l'une des revendications 1 à 10, est inséré dans une pièce tubulaire (7) puis une autre pièce tubulaire (7) est insérée dans le joint d'étanchéité (1), moyennant quoi, pendant le processus d'insertion, le joint d'étanchéité est passé d'une position de base relâchée vers une position de travail, de façon à ce que les lèvres d'étanchéité (2, 5) s'appuient l'une contre l'autre en se soutenant mutuellement avec leurs surfaces d'appui (12, 13).
